# EUROPEAN PATENT APPLICATION

(11) **EP 2 759 966 A1**
(43) Date of publication of application: **30.07.2014**
(21) Application number: 13159560.5
(22) Date of filing: 15.03.2013
(51) Int. Cl.: G06Q 10/10

(54) **Method for conducting a collaborative event and system employing same**

(30) Priority: 29.01.2013 US 201361757967 P
(71) Applicant: SMART Technologies ULC, Calgary, Alberta T2L 1Y1 (CA)
(72) Inventor: Windbrake, Tobias, Calgary, Alberta T2L 1Y1 (CA); Kohls, Christian, Calgary, Alberta T2L 1Y1 (CA); Boyle, Michael John, Calgary, Alberta T2L 1Y1 (CA); Nemes, Raul, Calgary, Alberta T2L 1Y1 (CA)
(74) Representative: Naismith, Robert Stewart

(57) **Abstract**

A method of conducting a collaborative event, comprising receives input from at least one participant computing device joined to the collaborative event, categorizing the input according to two or more categories defined within the collaborative event, and displaying the input according to the two or more categories.

## Description

### Field of the Invention

The present invention relates generally to collaboration systems and in particular, to a method for conducting a collaborative event and to a collaboration system employing the same.

### Background of the Invention

Interactive input systems that allow users to inject input such as for example digital ink, mouse events etc. into an application program using an active pointer (e.g. a pointer that emits light, sound or other signal), a passive pointer (e.g., a finger, cylinder or other object) or other suitable input device such as for example, a mouse or trackball, are well known. These interactive input systems include but are not limited to: touch systems comprising touch panels employing analog resistive or machine vision technology to register pointer input such as those disclosed in U.S. Patent Nos. 5,448,263; 6,141,000; 6,337,681; 6,747,636; 6,803,906; 7,232,986; 7,236,162; and 7,274,356 and in U.S. Patent Application Publication No. 2004/0179001, all assigned to SMART Technologies ULC of Calgary, Alberta, Canada, assignee of the subject application, the entire disclosures of which are incorporated herein by reference; touch systems comprising touch panels employing electromagnetic, capacitive, acoustic or other technologies to register pointer input; tablet and laptop personal computers (PCs); smartphones, personal digital assistants (PDAs) and other handheld devices; and other similar devices.

Conferencing and other event management systems, such as Microsoft^{®} Live Meeting, Citrix^{®} GoToMeeting^{®}, SMART Bridgit™, and the like are well known. These systems allow participants at different geographical locations to participate in a collaborative session using computing devices, by sharing content, such as, screen images and files, or a common page on an interactive board or whiteboard (IWB). For example, the SMART Bridgit™ version 4.2 conferencing system offered by SMART Technologies ULC, comprises one or more servers and clients, and provides plug-ins for event scheduling programs, such as, Microsoft Exchange^{®} or Microsoft Outlook^{®}. An event may be scheduled in Microsoft Outlook^{®} via a SMART Bridgit™ plug-in on a participant's computing device, by assigning a name, a start time and an end time to the event. Using a SMART Bridgit™ client program, a user may create an event session on the SMART Bridgit™ server to start an ad-hoc event. Other participants may join the event session using the SMART Bridgit™ client program running on their computing devices by entering the event name and any required password. In addition to sharing content, participants can annotate shared screen images by injecting digital ink thereon using a computer mouse, a touch screen, or an interactive whiteboard.

Participant response systems for enabling participants of an event to enter responses to posed questions, motions or the like are known in the art and have various applications. For example, during a conference, seminar or the like, participants can be provided with handsets that enable the participants to respond to questions, or to vote on motions raised during the conference or seminar. In the field of entertainment, audience members can be provided with handsets that enable the audience members to vote for entertainment programs. In the field of education, participants can be provided with handsets that enable the participants to respond to questions posed during lessons, tests or quizzes. These participant response systems advantageously provide immediate feedback to presenters, teachers, entertainment program producers, or event organizers. Additionally, with respect to the field of education, research shows that teachers teach and participants learn more effectively when there is immediate feedback regarding the participants' levels of understanding. It is therefore not surprising that such participant response systems are gaining wide acceptance in the field of education.

For example, U.S. Patent No. 4,247,908 to Lockhart, Jr. et al. discloses a two-way communications system for use with a host computer that includes a control unit, a base station and multiple radio/data terminal units. The control unit interfaces directly with the computer but uses a radio link to portable units. Voice and data signals can be transmitted and data between units is decoded, sorted, stored, encoded, and sent to its destination in accordance with predetermined protocol. An extensive self-diagnostic system is included. An active redundancy arrangement switches between two control units/base stations on a regular schedule if both units are up, and instantaneously if an "on" unit goes down.

U.S. Patent No. 5,002,491 to Abrahamson et al. discloses an interactive electronic classroom system for enabling teachers to teach students concepts and to receive immediate feedback regarding how well the students have learned the concepts. Structure is provided for enabling students to proceed in lockstep or at their own pace through exercises and quizzes, responding electronically to questions asked, the teacher being able to receive the responses, and to interpret a readout, in histogram or other graphic display form, of student responses. In an embodiment, a central computer using an IBM AT^{™} compatible system is employed, together with a plurality of student computers which range from simple devices to full-fledged personal computers. Optional peripheral hardware, such as VCRs or other recording/reproducing devices, may be used to provide lessons to students in association with the computer network.

U.S. Patent No. 6,790,045 to Drimmer discloses a method and system for analyzing student performance that defines student performance by classifying student performance into discrete performance classifications associated with corresponding activities related to an electronic course. An observed student performance level for at least one of the performance classifications is measured. A benchmark performance level or range is established for one or more of the performance classifications. It is determined whether the observed student performance level is compliant with the established benchmark performance level for the at least one performance classification. Instructive feedback is determined for the observed student based upon any material deviation of the observed student performance from at least one of the following: the benchmark performance level, the benchmark performance range, a group of benchmark performance levels, and a group of benchmark performance ranges.

U.S. Patent Application Publication No. 2004/0072136 to Roschelle et al. discloses a method and system for assessing a student's understanding of a process that may unfold, e.g., over time and space. A sophisticated approach of directing students to perform self-explanation is described, and enables instructors to enhance the value of a pedagogical process by providing meaningful and rapid feedback in a classroom setting.

U.S. Patent Application Publication No. 2006/0072497 to Buehler et al. discloses a response system and method of retrieving user responses from a plurality of users that includes providing a plurality of base units and a plurality of response units, each of the response units adapted to receive a user input selection and to communicate that user input selection with at least one base unit utilizing wireless communication. Personality data is provided for the response units. The personality data facilitates communication with a particular base unit. The personality data of a particular one of the response units is changed in order to change which of the base units that response unit communicates with. This allows a response unit to become grouped with a particular base unit at a particular time and become grouped with another base unit at another particular time. The personality data may be obtained from a database.

Although known participant response systems allow questionnaires or assessments to be administered to participants and response data gathered, these participant response systems typically have limited functionalities. Known participant response systems typically require an assessment to be created in a predefined format. If the facilitator, such as for example a teacher, wants to ask a question using content that is not in the predefined format, the facilitator must convert the assessment into a format that can be processed by the participant response system before the assessment can be administered. Conversion of the assessment may be performed manually, which is time consuming and a burden to the facilitator. Although various techniques, such as for example optical character recognition (OCR), may be used to facilitate conversion of assessment content, such techniques are also time consuming. Alternatively, a file format convertor may be employed to convert assessment files into a format that can be processed by the participant response system. However, file format convertors are typically able to process only a limited variety of file formats, and errors may be introduced into assessment files during conversion.

Improvements are therefore desired. It is therefore an object to provide a novel method for conducting a collaborative event and a novel collaboration system employing the same.

### Summary of the Invention

Accordingly, in one aspect there is provided a method of conducting a collaborative event, comprising receiving input from at least one participant computing device joined to the collaborative event; categorizing the input according to two or more categories defined within the collaborative event; and displaying the input according to said two or more categories.

In one embodiment, the method may further comprise recognizing text input on an interactive surface and using the recognized text to define the two or more categories. The text may be digital ink entered on the interactive surface and may be recognized using a hand-writing recognition application.

The displaying may comprise displaying the input in an overlapping manner. The two or more categories may be cause categories of a cause and effect analysis. In this case, the displaying may comprise displaying the input on one or more placeholders according to the cause categories. Alternatively, the two or more categories may be categories of a strengths, weaknesses, opportunities and threats analysis.

The collaborative event may be a voting collaborative event. In this case, the two or more categories may comprise two or more voting options and the displaying may comprise incrementing a displayed vote count. The number of votes available for distribution among the two or more voting options may be displayed.

The categorizing may comprise searching indexed images for one or more images having an index matching the input, and the displaying may comprise displaying the one or more images having an index matching the input.

The two or more categories defined within the collaborative event may be two or more spatial indexes within a graphical image, and the displaying may comprise displaying the input on the graphical image at positions corresponding to the two or more spatial indexes.

According to another aspect, there is provided a non-transitory computer-readable medium having embodied thereon a computer program for conducting a collaborative event, the program comprising instructions which, when executed by processing structure, carry out the method described above.

According to another aspect, there is provided an interactive board configured to communicate with processing structure during a collaborative event, said interactive board further being configured, during said collaborative event, to display input received from at least one participant computing device joined to the collaborative event, the input being categorized according to two or more categories defined within the collaborative event and being displayed according to said two or more categories.

The interactive board may comprise an interactive surface configured to receive text entered thereon during the collaborative event, the text being recognizable for defining the two or more categories.

According to yet another aspect, there is provided a collaboration system comprising one or more processing devices that communicate during a collaborative event; at least one participant computing device in communication with the one or more processing devices, wherein at least one of the processing devices is configured to categorize input received from the at least one participant computing device during the collaborative event according to two or more defined categories; and at least one interactive board in communication with the one or more processing devices, said interactive board being configured, during said collaborative event, to display the input according to said two or more categories.

According to yet another aspect, there is provided a method of configuring a collaborative event comprising recognizing text within at least a first portion of digital ink entered on an interactive surface; and using recognized text to define two or more categories of said collaborative event.

In one embodiment, the method may further comprise recognizing text within a second portion of the digital ink and using text recognized within the second portion to define a question of the collaborative event. The method may further comprise designating the first portion of the digital ink and the second portion of the digital ink via input on the interactive surface.

According to yet another aspect, there is provided a non-transitory computer-readable medium having embodied thereon a computer program for configuring a collaborative event, the program comprising instructions which, when executed by processing structure, carry out the above method.

According to still yet another aspect, there is provided an interactive board comprising an interactive surface, the interactive board being configured to communicate with processing structure conducting a collaborative event, the interactive board further being configured, during said collaborative event, to recognize text within a first portion of digital ink input on said interactive board and use the recognized text to define two or more categories of said collaborative event.

### Brief Description of the Drawings

Embodiments will now be described more fully with reference to the accompanying drawings in which:

Figure 1 is a schematic perspective view of a collaboration system;

Figure 2 is a schematic view of a portion of the collaboration system of Figure 1;

Figures 3A to 3C are front views of a participant computing device forming part of the collaboration system of Figure 1, and presenting a graphical user interface showing login, status and input screens, respectively;

Figures 4A and 4B are schematic views of the portion of the collaboration system of Figure 2, showing updates made to a collaboration window presented on an interactive whiteboard during a collaboration session;

Figure 5 is a front view of the interactive whiteboard, showing another embodiment of a collaboration window;

Figure 6 is a front view of the interactive whiteboard, showing another embodiment of a collaboration window;

Figure 7 is a front view of the interactive whiteboard, showing another embodiment of a collaboration window;

Figure 8 is a front view of the interactive whiteboard, showing another embodiment of a collaboration window;

Figure 9 is a front view of the participant computing device of Figures 3A to 3C, presenting another embodiment of a graphical user interface showing a voting screen in accordance with the collaboration window of Figure 8;

Figure 10 is a front view of the interactive whiteboard showing updates made to the collaboration window of Figure 8 during a collaboration session;

Figure 11 is a front view of the interactive whiteboard showing still another embodiment of a collaboration window;

Figures 12A and 12B are front views of the participant computing device and presenting another embodiment of a graphical user interface showing another embodiment of a voting screen being updated during a collaboration session;

Figures 13A and 13B are front views of the interactive whiteboard showing still another embodiment of a collaboration window, being updated during a collaboration session;

Figure 14 is a front view of the interactive whiteboard showing still another embodiment of a collaboration window;

Figures 15A and 15B of the participant computing device and presenting another embodiment of a graphical user interface showing download and download display screens, respectively;

Figure 16 is a schematic view of a portion of the collaboration system of Figure 1, and showing still another embodiment of a collaboration window;

Figure 17 is a schematic view of a portion of the collaboration system of Figure 1, and showing still another embodiment of a collaboration window;

Figure 18 is a schematic view of a portion of the collaboration system of Figure 1, and showing still another embodiment of a collaboration window;

Figure 19 is a perspective view of a portion of another embodiment of a collaboration system;

Figure 20 is a perspective view of a portion of still another embodiment of a collaboration system; and

Figures 21A to 21C are front views of another embodiment of a participant computing device presenting another embodiment of a graphical user interface showing login, contributions and insertion screens, respectively.

### Detailed Description of the Embodiments

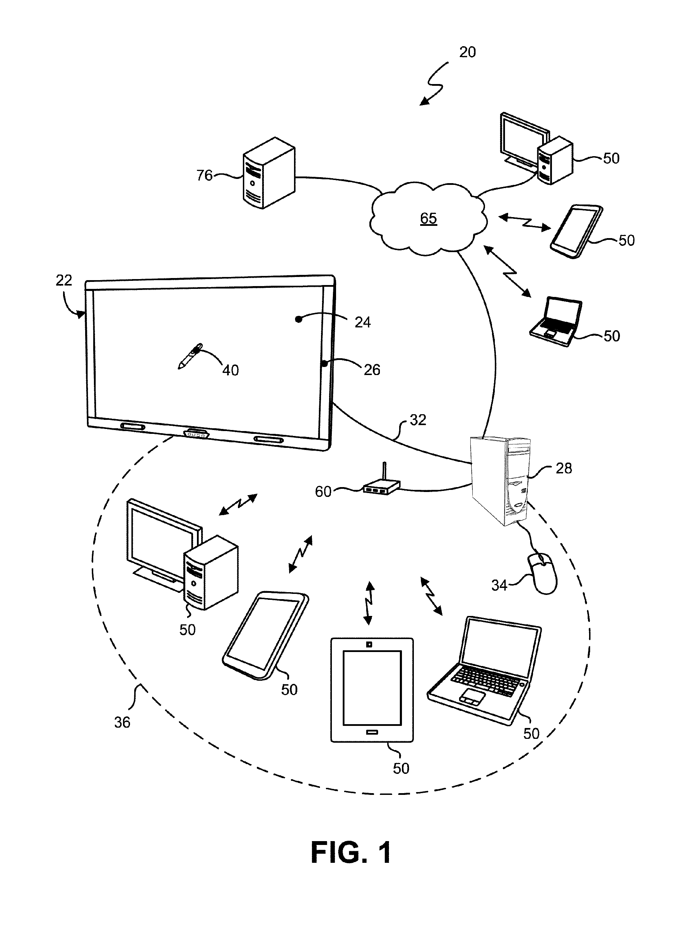

Turning now to Figure 1, a collaboration system 20 is shown. In this embodiment, the collaboration system 20 comprises at least one general purpose computing device 28 installed in a collaboration site, such as for example, a meeting room, a classroom, a lecture theater, etc. An interactive board or whiteboard 22 is mounted on a generally vertical support surface such as for example, a wall surface or the like or is otherwise supported or suspended in an upright orientation and is connected to the general purpose computing device 28 via a universal serial bus (USB) cable 32 or other suitable wired or wireless communication link. Interactive whiteboard 22 comprises a generally planar, rectangular interactive surface 24 that is surrounded about its periphery by a bezel 26. An image, such as for example a computer desktop is displayed on the interactive surface 24. In this embodiment, the interactive whiteboard 22 uses a liquid crystal display (LCD) panel having a display surface defining the interactive surface 24 to display the images. The interactive whiteboard 22 allows a user to inject input such as digital ink, mouse events etc. into an application program executed by the general purpose computing device 28.

The interactive whiteboard 22 employs machine vision to detect one or more pointers brought into a region of interest in proximity with the interactive surface 24, and transmits pointer data to the general purpose computing device 28 via the USB cable 32. The general purpose computing device 28 processes the output of the interactive whiteboard 22 and adjusts image data that is output to the interactive whiteboard 22, if required, so that the image presented on the interactive surface 24 reflects pointer activity. In this manner, the interactive whiteboard 22 and the general purpose computing device 28 allow pointer activity proximate to the interactive surface 24 to be recorded as writing or drawing or used to control execution of one or more application programs executed by the general purpose computing device 28.

Imaging assemblies (not shown) are accommodated by the bezel 26, with each imaging assembly being positioned adjacent a different corner of the bezel. Each of the imaging assemblies comprises an image sensor and associated lens assembly that provides the image sensor with a field of view sufficiently large as to encompass the entire interactive surface 24. A digital signal processor (DSP) or other suitable processing device associated with each image sensor sends clock signals to the image sensor causing the image sensor to capture image frames at the desired frame rate.

The imaging assemblies are oriented so that their fields of view overlap and look generally across the entire interactive surface 24. In this manner, any pointer 40 such as for example a user's finger, a cylinder or other suitable object, or a passive or active pen tool or eraser tool that is brought into proximity of the interactive surface 24 appears in the fields of view of the imaging assemblies and thus, is captured in image frames acquired by multiple imaging assemblies. When the imaging assemblies acquire image frames in which a pointer exists, the imaging assemblies convey the image frames to a master controller. The master controller in turn processes the image frames to determine the position of the pointer in (x,y) coordinates relative to the interactive surface 24 using triangulation. The pointer coordinates are then conveyed to the general purpose computing device 28 which uses the pointer coordinates to update the image displayed on the interactive surface 24 if appropriate. Pointer contacts on the interactive surface 24 can therefore be recorded as writing or drawing or used to control execution of application programs running on the general purpose computing device 28.

The general purpose computing device 28 in this embodiment is a general purpose computer or other suitable processing device comprising, for example, a processing unit, system memory (volatile and/or non-volatile memory), other non-removable or removable memory (e.g., a hard disk drive, RAM, ROM, EEPROM, CD-ROM, DVD, flash memory, etc.) and a system bus coupling the various computer components to the processing unit. The user may also enter input or give commands to the general purpose computing device 28 through a mouse 34 or a keyboard (not shown). Other input techniques such as voice or gesture-based commands may also be used to enable user interaction with the collaboration system 20.

The general purpose computing device 28 is communicatively coupled to a wireless network device 60 and is configured to control the wireless network device 60 to provide a wireless network 36 over which participant computing devices 50 communicate. In this embodiment, the wireless network 36 is assigned a wireless network service set identifier (SSID) and communications via the wireless network device 60 are encrypted using a security protocol, such as Wi-Fi Protected Access II (WPA2) protocol with a customizable network key. Methods for conducting a collaborative event utilizing an SSID are described in U.S. Application Serial No. 13/753,217 filed on January 29, 2013 to Hill et al., entitled "Method for Organizing a Collaborative Event and System Employing Same" and assigned to SMART Technologies ULC, the entire disclosure of which is incorporated herein by reference.

The general purpose computing device 28 is also communicatively coupled to a network 65 over either a wired connection, such as an Ethernet, or a wireless connection, such as Wi-Fi, Bluetooth, etc. The network 65 maybe a local area network (LAN) within an organization, a cellular network, the Internet, or a combination of different networks. A server computing device, namely a collaboration server 76, communicates with the network 65 over a suitable wireless connection, wired connection or a combined wireless/wired connection. The collaboration server 76 is configured to run a collaboration management application, for managing collaboration sessions by allowing collaboration participants to share audio, video and data information during a collaboration session. One or more participant computing devices 50 may also communicate with the network 65 over a wireless connection, a wired connection or a combined wireless/wired connection.

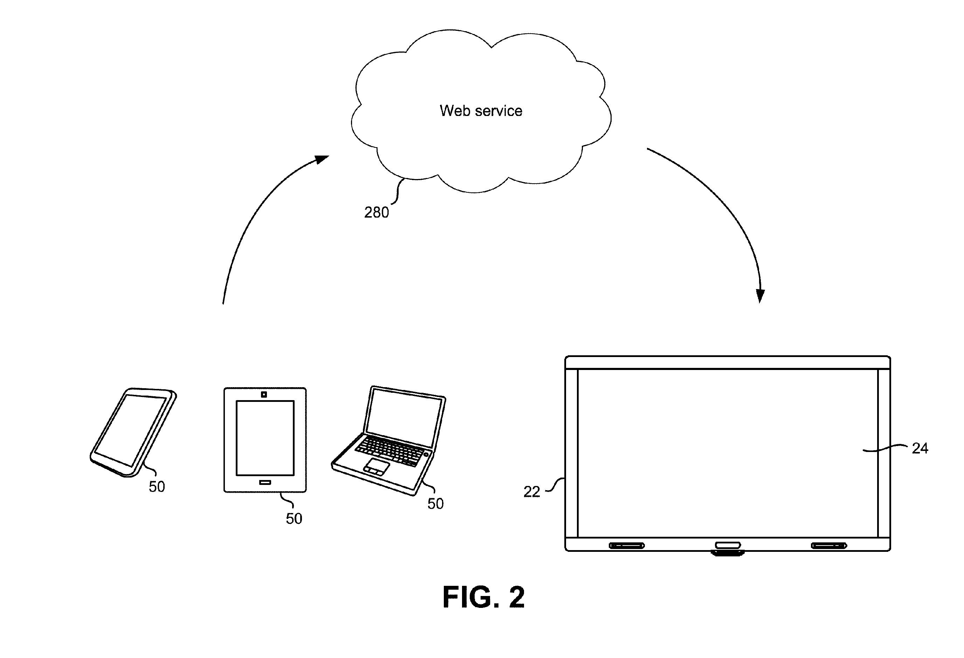

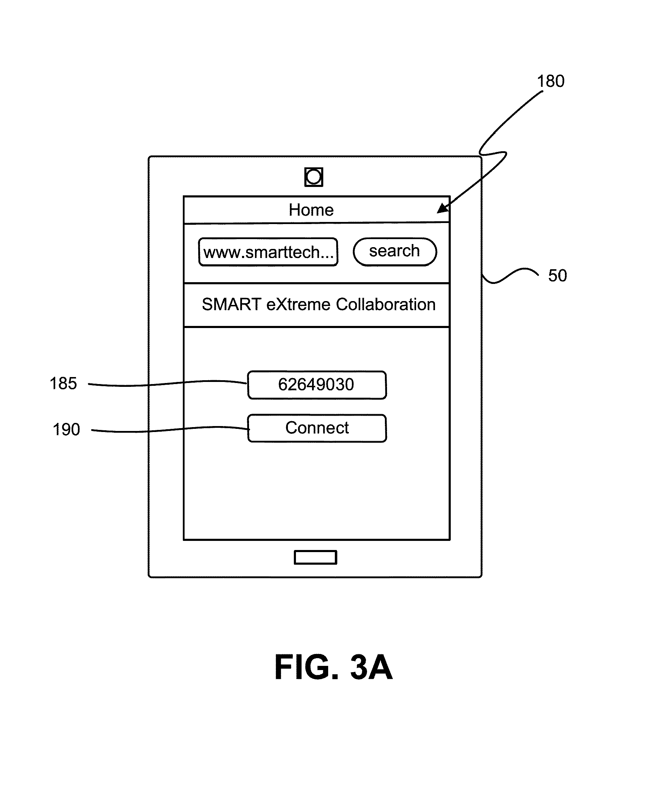

Figure 2 schematically shows a portion of the collaboration system 20. As can be seen, the participant computing devices 50 are in communication with the interactive whiteboard 22 via web service 280. Each participant computing device 50 is configured to run a collaboration application. During running of the collaboration application, a graphical user interface is presented on a display of the participant computing device 50. Figures 3A to 3C show an exemplary graphical user interface presented by the collaboration application. After the collaboration application has been launched, the collaboration application presents a login screen, which is shown in Figure 3A and is generally indicated by reference numeral 180. Login screen 180 comprises a Session ID field 185, in which a Session ID of a desired collaboration session may be entered. The login screen 180 also comprises a "Connect" button 190, which may be selected to connect the participant computing device 50 to the collaboration session identified by the Session ID entered in Session ID field 185.

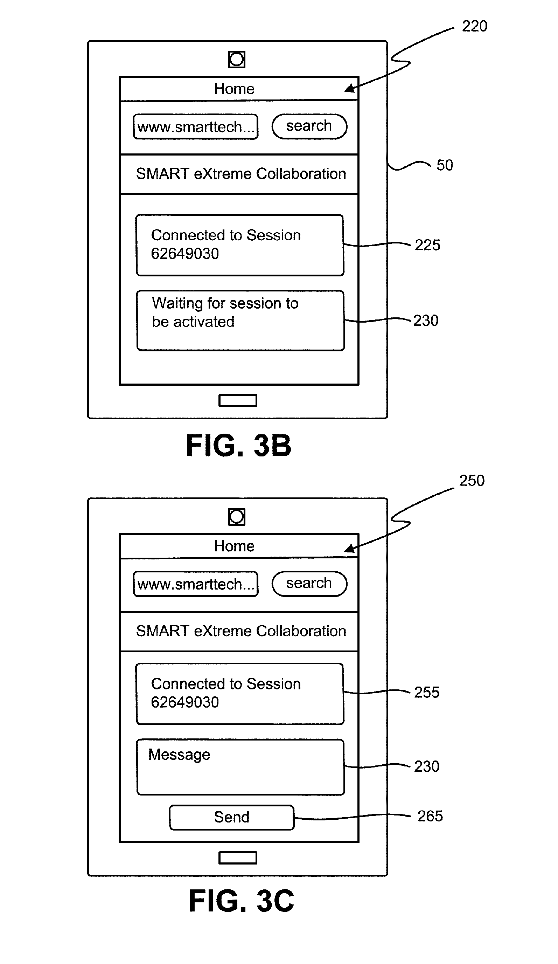

Upon connection to the collaboration session, the collaboration application presents a status screen, which is shown in Figure 3B and is generally indicated by reference numeral 220. Status screen 220 comprises a status box 225, in which the Session ID of the collaboration session is displayed. Status screen 220 also comprises a dialogue field 230, in which status messages indicating the current status of the collaboration session are displayed, and in which text may be entered. Before an authorized user initiates a command to begin or "activate" the collaboration session, the collaboration application displays a "Waiting for session to be activated" message in the dialogue field 230, as shown. In this embodiment, the authorized user is a facilitator of the collaboration session, such as for example a teacher.

Once the authorized user has initiated the command to begin the collaboration session, the collaboration application presents an input screen, which is shown in Figure 3C and is generally indicated by reference numeral 230. The input screen 250 comprises the status box 225, the dialogue field 230, and a send button 265, which may be selected to send the text entered into the dialogue field 230 as a participant contribution to the collaboration session.

During the collaboration session, the collaboration server 76 instructs the general purpose computing device 28 to display a collaboration window on the interactive surface 24 of the interactive whiteboard 22. In this embodiment, the collaboration session is configured by the facilitator to categorize participant contributions according to categories defined by the facilitator through input of digital ink in the collaboration window. Additionally, in this embodiment, the collaboration server 76 runs a hand-writing recognition application that is configured to recognize digital ink in the form of hand-written annotations, and to convert the recognized hand-written annotations into text for use by the collaboration server 76.

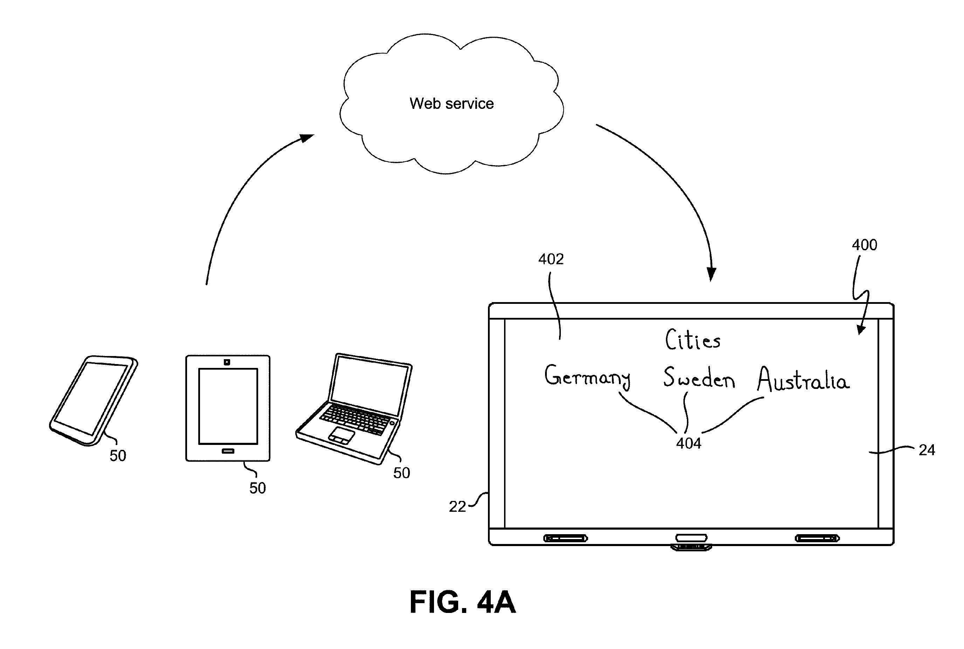

Figure 4A shows an example of a collaboration window 402 displayed on the interactive surface 24 of the interactive whiteboard 22 during a collaboration session. In the example shown, the categories defined within the collaboration session are "Germany", "Sweden" and "Australia". The categories have been entered on the interactive surface 24 by the facilitator as digital ink comprising hand-written annotations 404, and in turn have been converted into text by the hand-writing recognition application running on the collaboration server 76 and used to define the categories within the collaboration session.

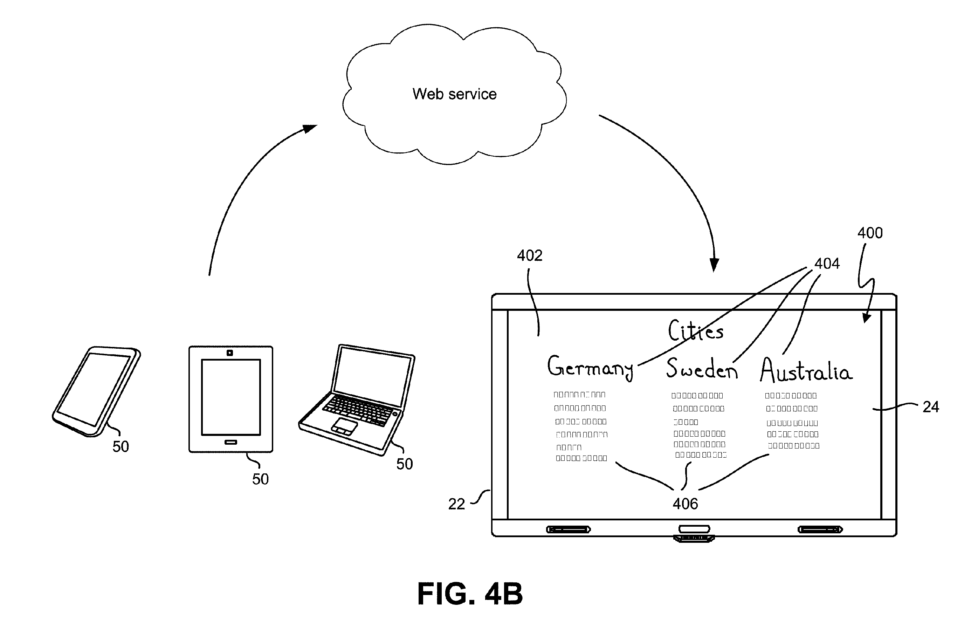

As participant contributions are received, the collaboration server 76 processes received participant contributions to categorize them into one or more defined categories, and communicates the categorized participant contributions to the general purpose computing device 28. The general purpose computing device 28 displays the categorized participant contributions on the interactive surface 24 of the interactive whiteboard 22 in a manner defined by the collaboration session. In Figure 4B, the categorized participant contributions 406 are displayed in a non-overlapping manner under their respective category.

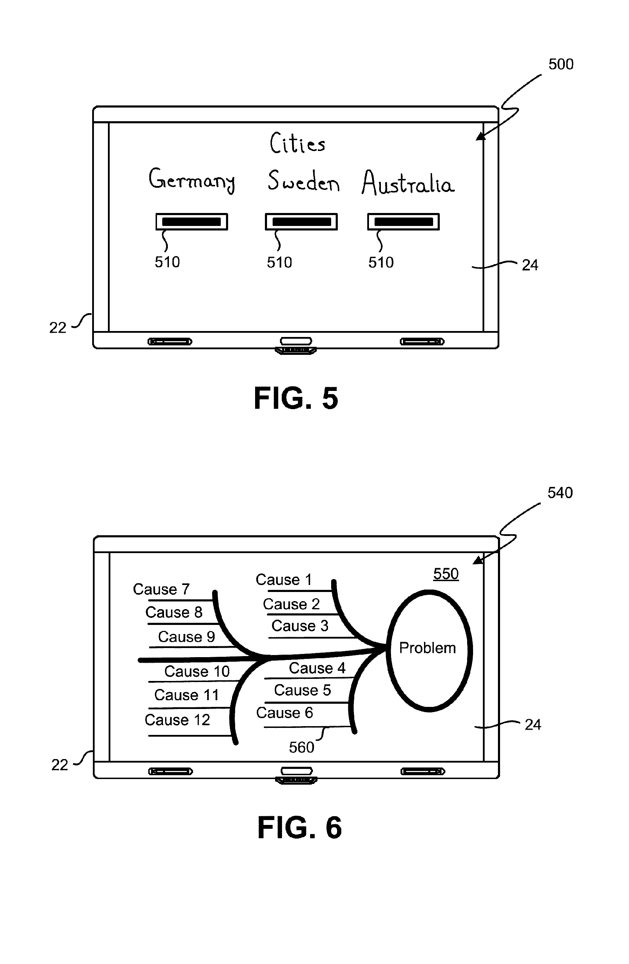

The collaboration session may be configured by the facilitator to display categorized participant contributions on the interactive surface 24 of the interactive whiteboard 22 in other manners. For example, Figure 5 shows another embodiment of a collaboration window, and which is generally indicated by reference numeral 500. In this embodiment, the categorized participant contributions 510 are displayed on the interactive surface 24 in an overlapping or "stacked" manner under their respective category.

Other configurations are possible. For example, Figure 6 shows an example of a collaboration window displayed on the interactive surface 24 of the interactive whiteboard 22 according to another embodiment, and which is generally indicated by reference numeral 540. In the example shown, the categories defined within the collaboration session are "cause" categories for cause-and-effect analysis, and the collaboration window 540 is configured generally in the form of a cause-and-effect diagram. The collaboration window 540 comprises a plurality of placeholders 560 on which categorized participant contributions are displayed, with each placeholder 560 corresponding to one of the defined cause categories. As participant contributions sent from participant computing devices 50 are received by the collaboration server 76, the collaboration server 76 processes the received participant contributions and categorizes them according to the defined categories, and communicates the categorized participant contributions to the general purpose computing device 28. The general purpose computing device 28 in turn displays the categorized participant contributions on the interactive surface 24 of the interactive whiteboard 22 on the placeholders 560 accordingly.

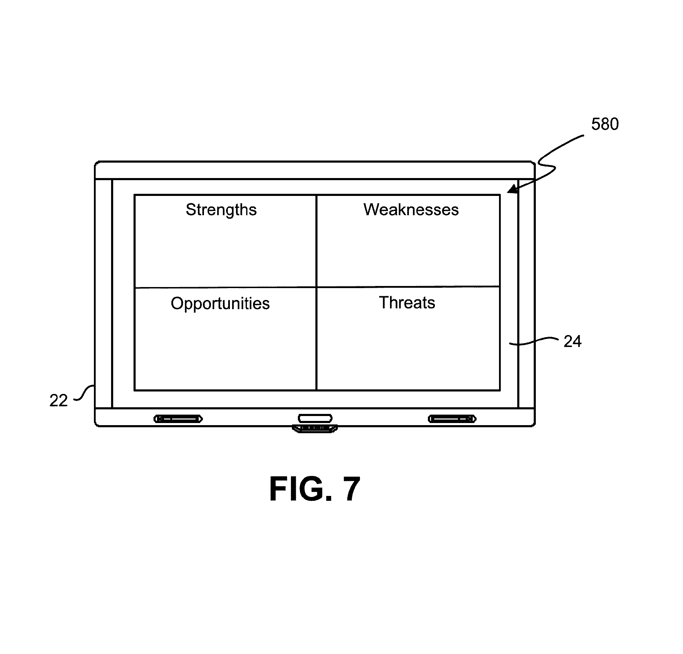

Figure 7 shows an example of another embodiment of a collaboration window displayed on the interactive surface 24 of the interactive whiteboard 22, and which is generally indicated by reference numeral 580. In this embodiment, the categories defined within the collaboration session are categories for strengths, weaknesses, opportunities and threats (SWOT) analysis, and the collaboration window 580 is configured generally in the form of a SWOT matrix. In the embodiment shown, the collaboration server 76 processes received participant contributions and categorizes them according to the defined categories (namely strength, weakness, opportunity and threat) and communicates the categorized participant contributions to the general purpose computing device 28. The general purpose computing device 28 in turn displays the categorized participant contributions on the interactive surface 24 of the interactive whiteboard 22 accordingly.

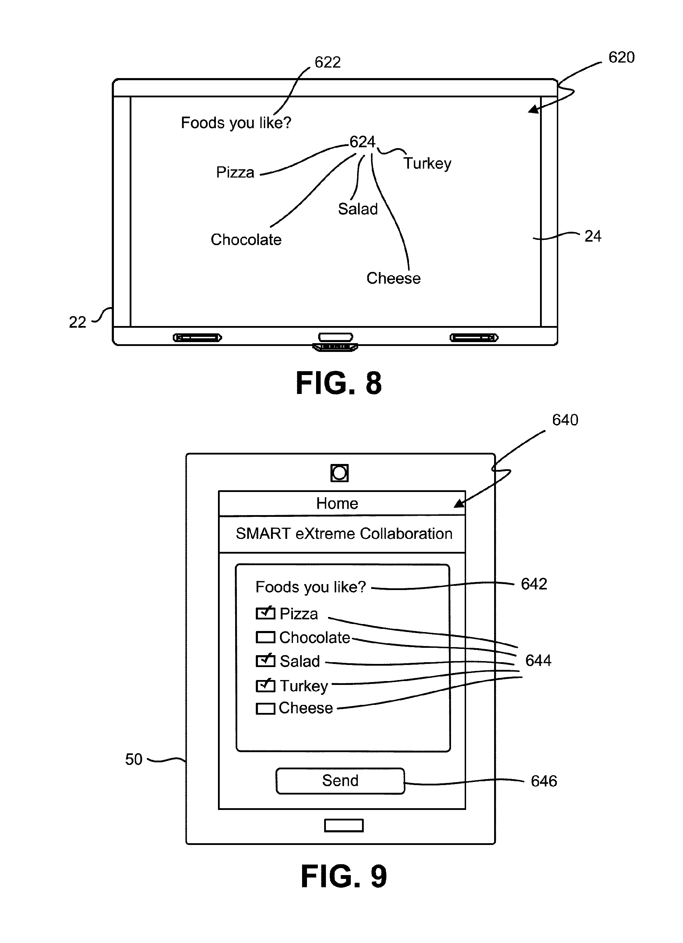

The collaboration session may alternatively be configured as a voting collaboration session, in which the collaboration session is configured to collect and display votes from participants. For example, Figure 8 shows another embodiment of a collaboration window displayed on the interactive surface 24 of the interactive whiteboard 22, which is generally indicated by reference numeral 620. Collaboration window 620 comprises a question field 622 in which a question for consideration by participants is displayed. In this embodiment, the question has been entered on the interactive surface 24 by the facilitator as digital ink comprising hand-written annotations 404, which in turn have been converted into text by the hand-writing recognition application running on the collaboration server 76. The collaboration window 620 also comprises a plurality of response fields 624, with each response field 624 comprising a possible response to the question. In this embodiment, each response has been entered on the interactive surface 24 by the facilitator as digital ink comprising hand-written annotations 404, which in turn have been converted into text by the hand-writing recognition application running on the collaboration server 76. The question and the responses displayed within the collaboration window 620 can be designated by the facilitator using input, such as for example mouse events, on the hand-written annotations 404 on interactive surface 24. The designated question and responses are in turn used by the collaboration server 76 to define the question and the possible responses for the collaboration session that are conveyed to participant computing devices.

The collaboration application running on each participant computing device 50 is configured to present a voting screen, which is shown in Figure 9 and is generally indicated by reference numeral 640. Voting screen 640 comprises a question field 642, in which the question displayed in question field 622 is shown. The voting screen 640 further comprises a plurality of option boxes 644, each option box 644 corresponding with one of the possible responses displayed in the collaboration window 620. Each of the option boxes 644 may be selected to indicate a vote for the response associated therewith. In the embodiment shown, the user may indicate a vote for one or more of the possible responses. The voting screen 640 further comprises a send button 646, which may be selected to send a participant contribution comprising the one or more indicated votes to the collaboration session.

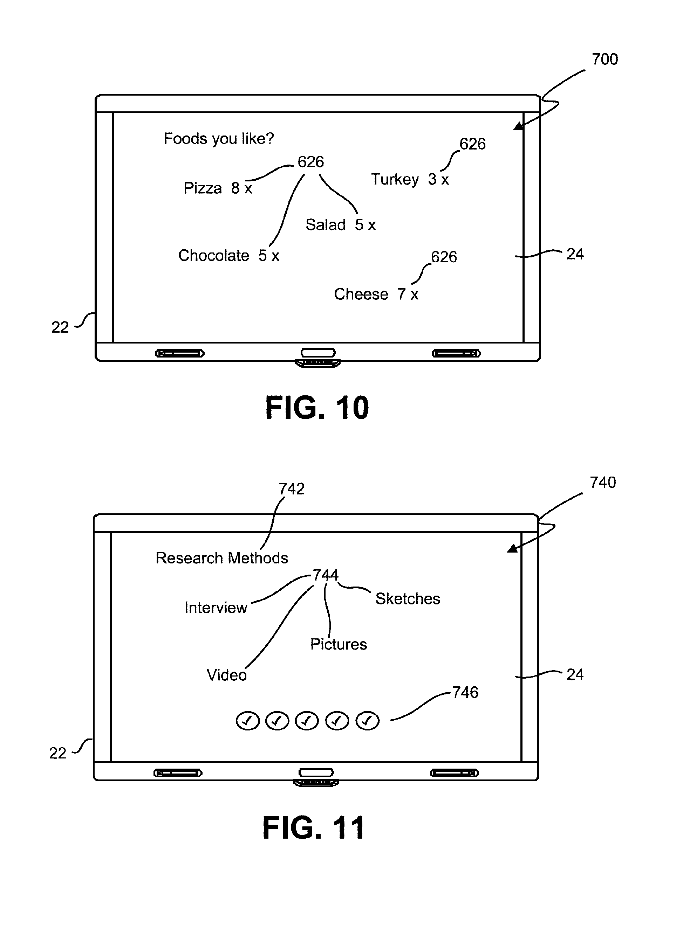

As participant contributions are received, the collaboration server 76 processes the received participant contributions to categorize them into one or more defined categories. In this embodiment, the one or more defined categories are the possible responses. The collaboration server 76 communicates the categorized participant contributions to the general purpose computing device 28, which in turn updates the collaboration window 620 displayed on the interactive surface 24 to increment a vote count 626 for the response associated therewith, as shown in Figure 10.

The voting collaboration session may alternatively be configured such that only a limited number of votes are available for each participant to distribute among the possible responses. For example, Figure 11 shows another embodiment of a collaboration window displayed on the interactive surface 24 of the interactive whiteboard 22, which is generally indicated by reference numeral 740. Collaboration window 740 comprises a topic field 742 in which a topic for consideration by participants is displayed. Collaboration window 740 also comprises a plurality of response fields 744, with each response field 744 comprising a possible response for the topic. Collaboration window 740 further comprises a vote token field 746, in which a number of vote tokens available for each participant to distribute among the possible responses is shown. In the example shown, there are five (5) tokens available for each participant to distribute among the possible responses.

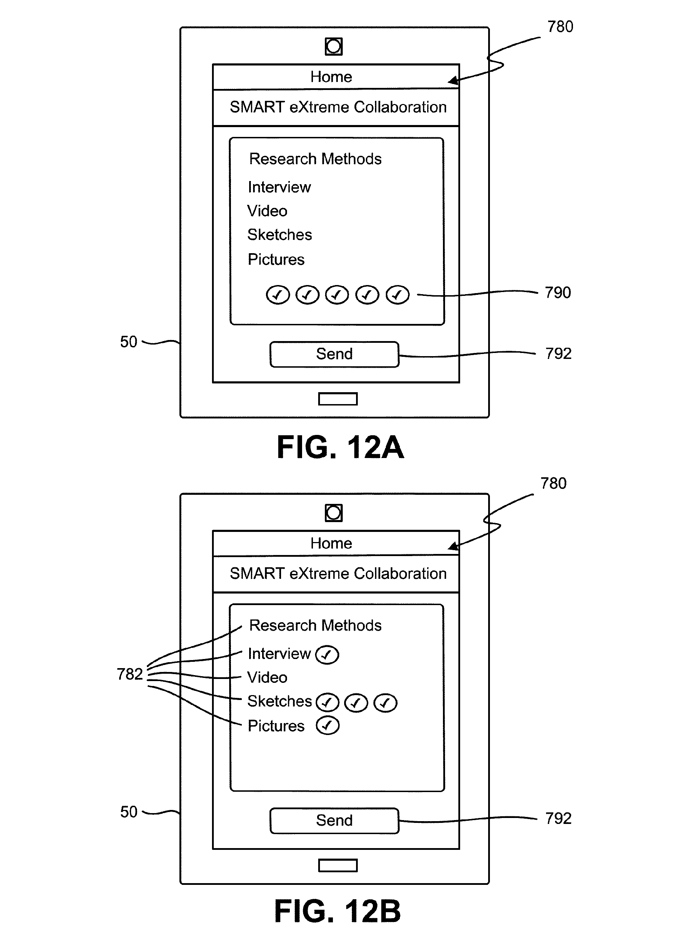

In this embodiment, the collaboration application running on each participant computing device 50 presents a vote token screen. Figure 12A shows the vote token screen, which is generally indicated by reference numeral 780. Vote token screen 780 comprises a list 782 of the possible responses displayed in the collaboration window 740. Vote token screen 780 further comprises one or more vote tokens 790, each of which may be moved by a participant within the vote token screen 780 and placed adjacent one of the responses in the list 782 to indicate a vote for that response, as shown in Figure 12B. The vote token screen 780 further comprises a send button 792, which may be selected to send a participant contribution comprising the one or more indicated votes to the collaboration session.

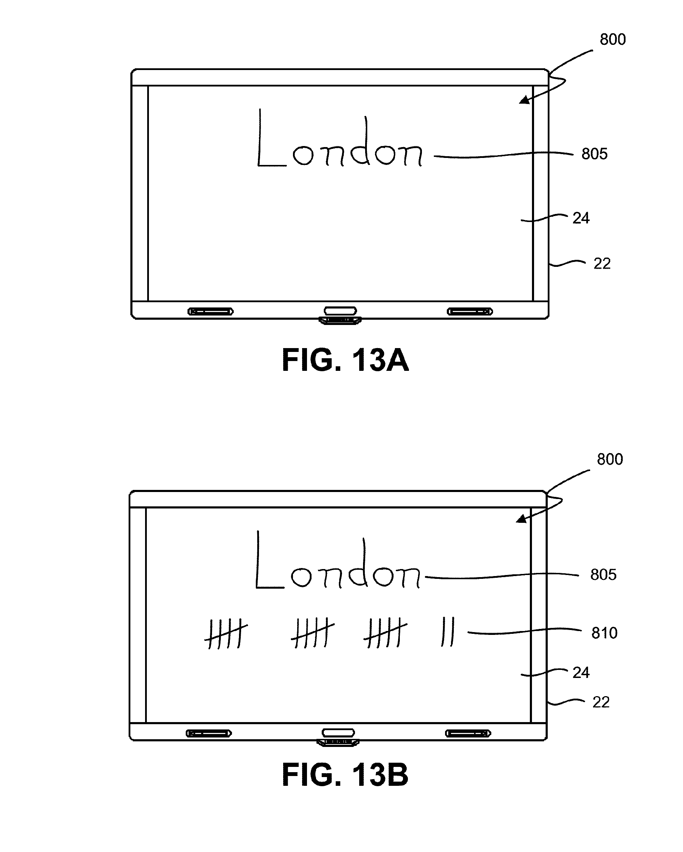

Still other configurations of the voting collaboration session are possible. For example, Figure 13A shows another example of a collaboration window displayed on the interactive surface 24 of the interactive whiteboard 22, which is generally indicated by reference numeral 800. Collaboration window 800 comprises a topic field 805 in which a topic for consideration by participants is displayed. In the example shown, the topic is the city name "London".

In this embodiment, the collaboration application running on each participant computing device 50 presents a voting screen (not shown) which comprises a vote button (not shown) that may be selected to indicate a vote for the topic displayed in the topic field 805. The voting screen also comprises a send button (not shown), which may be selected to send a participant contribution comprising any indicated vote to the collaboration session.

As participant contributions are received, the collaboration server 76 processes the received participant contributions to categorize them into one or more defined categories. In this embodiment, the one or more defined categories are "vote" and "no vote". The collaboration server 76 communicates the categorized participant contributions to the general purpose computing device 28, which in turn updates the collaboration window 800 displayed on the interactive surface 24 to increment a vote count 810 for each vote received for the topic, as shown in Figure 13B.

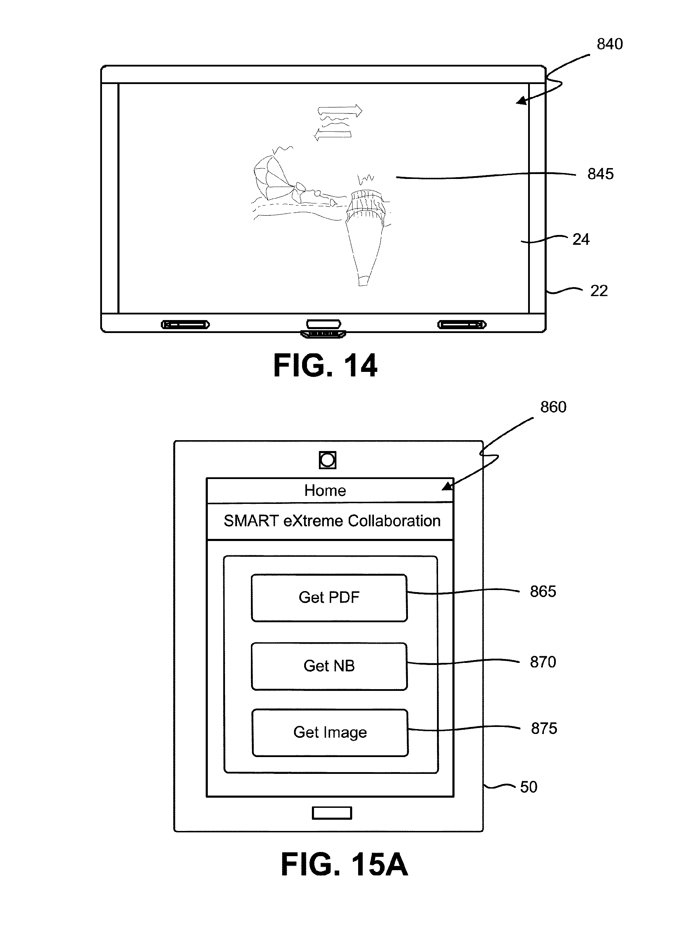

The collaboration system 20 may also be configured to allow participants to download content displayed in the collaboration window presented on the interactive surface 24 to participant computing devices 50. For example, Figure 14 shows another embodiment of a collaboration window displayed on the interactive surface 24 of the interactive whiteboard 22, which is generally indicated by reference numeral 840. Collaboration window 840 comprises an input area 845, which in the embodiment shown comprises digital ink in the form of a line drawing.

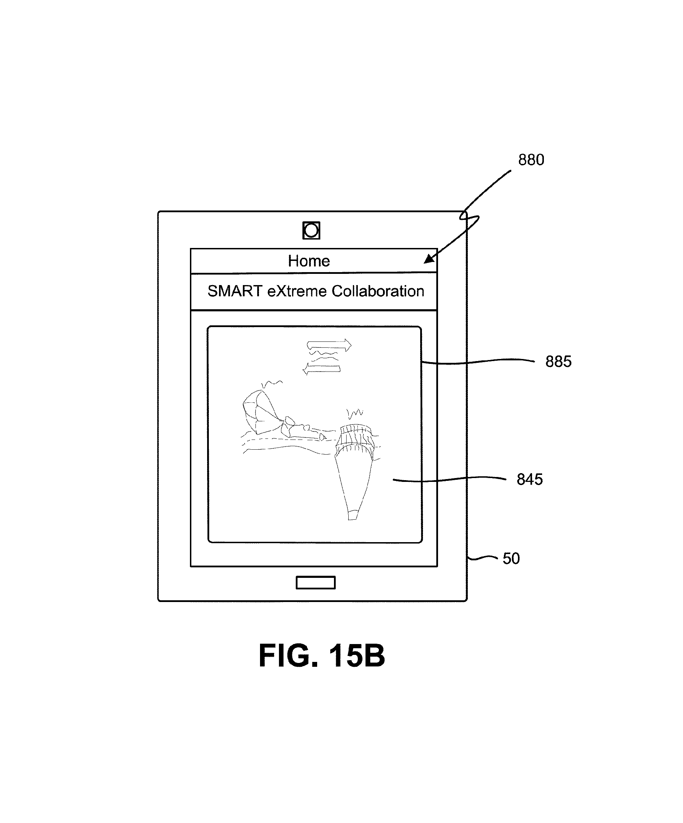

In this embodiment, the collaboration application running on each participant computing device 50 presents a download screen, which is shown in Figure 15A and is generally indicated by reference numeral 860. Download screen 860 comprises a "Get PDF" button 865, a "Get NB" button 870, and a "Get Image" button 875, each of which may be selected to download at least a portion of the input area 845 to the participant computing device 50 as a Portable Document Format (PDF) file, a SMART Notebook file, or an image file, respectively. The SMART Notebook file format is developed by SMART Technologies ULC. In this embodiment, the format of the image file is the GIF format, however it will be understood that other suitable image file formats may alternatively be used. Once one of the buttons 865, 870 and 875 has been selected, the participant computing device 50 communicates a download request to the collaboration session. Upon receiving the download request, the collaboration server 76 communicates at least a portion of the input area 845, and any digital ink therein, to the participant computing device 50 as a file having the selected format. In response, the collaboration application presents a download display screen 880, as shown in Figure 15B. The download display screen 880 comprises a window 885 in which at least a portion of the input area 845, and any digital ink therein, is displayed.

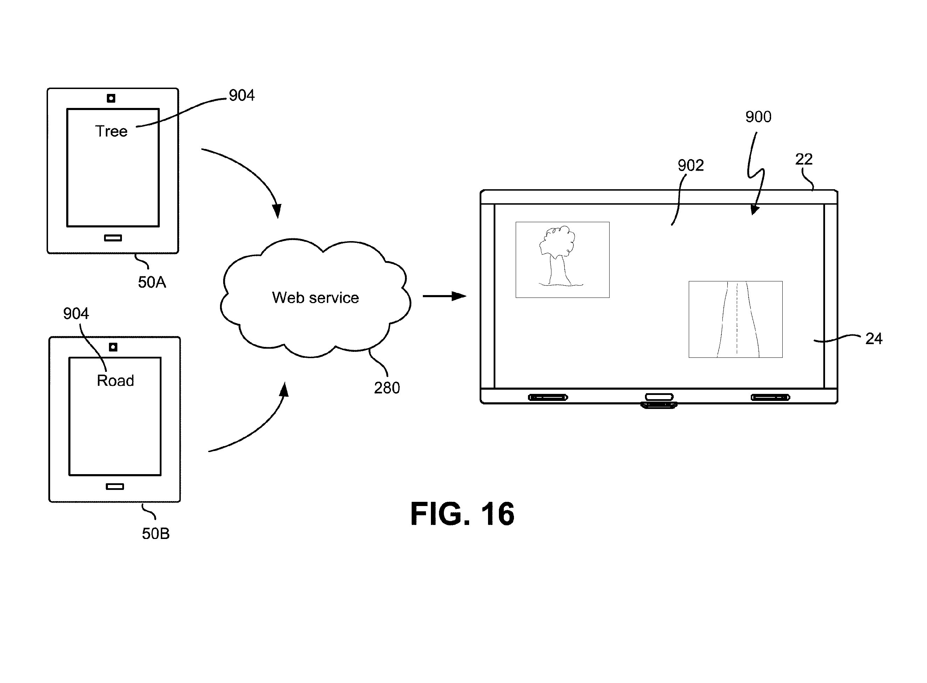

In other embodiments, the collaboration system may allow text sent by participants from their participant computing devices 50 to be effectively converted into images that are displayed on the interactive surface 24 of the interactive whiteboard 22. For example, Figure 16 schematically shows a portion of another embodiment of a collaboration system, and which is generally indicated by reference numeral 900. In the embodiment shown, the collaboration system comprises two (2) participant computing devices 50A and 50B that are in communication with the interactive whiteboard 22 via the web service 280. A collaboration window 902 that comprises a display area is presented on the interactive surface 24.

In this embodiment, the collaboration application running on the participant computing devices 50A and 50B presents a dialogue screen comprising a dialogue field 904, in which text may be entered. The dialogue screen further comprises a send button (not shown), which may be selected to send the entered text as a participant contribution to the collaboration session. In the example shown, the word "Tree" has been entered into the dialogue field 904 presented on participant computing device 50A, and the word "Road" has been entered into the dialogue field 904 presented on participant computing device 50B.

As participant contributions are received, the collaboration server 76 processes received participant contributions to recognize words therein. If one or more words are recognized, the collaboration server 76 searches a database (not shown) of indexed images and, for each recognized word, finds an image having an index matching the recognized word. The collaboration server 76 then communicates the matching images to the general purpose computing device 28 for display on the interactive surface 24 of the interactive whiteboard 22. In the example shown, an image of a tree and an image of a road are displayed in the display area of the collaboration window 902.

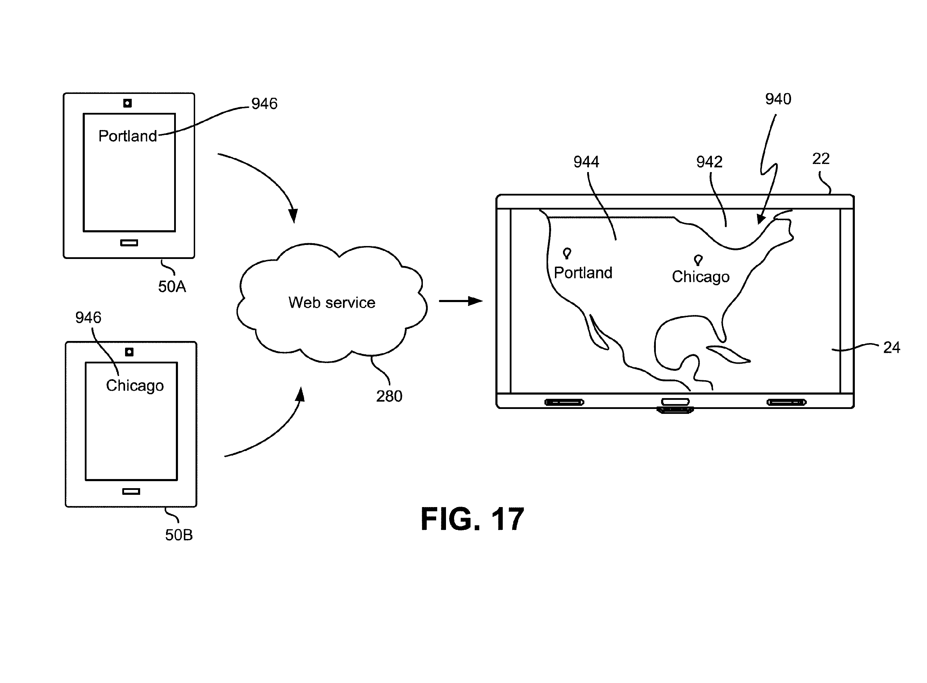

Other configurations are possible. For example, Figure 17 schematically shows a high level portion of another embodiment of a collaboration system, and which is generally indicated by reference numeral 940. In the embodiment shown, the collaboration system comprises two (2) participant computing devices 50A and 50B that are in communication with the interactive whiteboard 22 via the web service 280. A collaboration window 942 is displayed on the interactive surface 24 of the interactive whiteboard 22. The collaboration window 942 comprises a display area in which a graphical image 944 comprising a plurality of spatial indexes is displayed. In the example shown, the graphical image 944 is a geographical map, and each spatial index is a city name that is spatially indexed within the graphical image according to the geographical location of the city on the map.

The collaboration application running on the participant computing devices 50A and 50B presents a dialogue screen comprising a dialogue field 946, in which text may be entered. The dialogue screen further comprises a send button (not shown), which may be selected to send the entered text to the collaboration session as a participant contribution. In the example shown, the word "Portland" has been entered into the dialogue field 946 presented on participant computing device 50A, and the word "Chicago" has been entered into the dialogue field 946 presented on participant computing device 50B. As each participant contribution is received, the collaboration server 76 processes the participant contribution to recognize one or more words therein. Once one or more words are recognized, the collaboration server 76 processes the one or more words to categorize them into one or more defined categories. In this embodiment, the one or more defined categories are the spatial indexes, whereby the processing by the collaboration server 76 comprises searching the spatial indexes of the graphical image 944 for indexes matching the one or more words. If a match is found, the collaboration server 76 then communicates the one or more matching words to the general purpose computing device 28 for display within the graphical image 944 at a position corresponding to the spatial index of the one or more matching words.

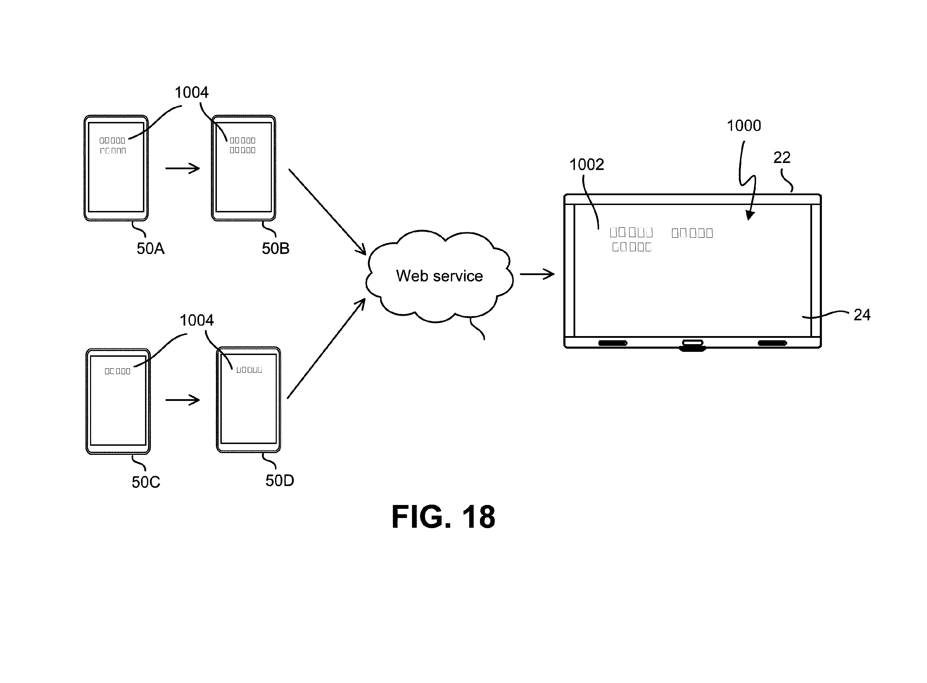

In other embodiments, the collaboration system may allow participants using two or more participant computing devices to work together in preparing a joint participant contribution to be sent to the collaboration session. For example, Figure 18 schematically shows a portion of another embodiment of a collaboration system, and which is generally indicated by reference numeral 1000. In the embodiment shown, the collaboration system 1000 comprises four (4) participant computing devices 50A, 50B, 50C and 50D that are in communication with the interactive whiteboard 22 via the web service 280. A collaboration window 1002 comprising a display area is presented on the interactive surface 24 of the interactive whiteboard 22.

In this embodiment, the participant computing devices 50A, 50B, 50C and 50D are assigned to participant groups that are defined within the collaboration session, such as for example by the facilitator. In the example shown, the participant computing devices 50A and 50B are assigned to a first participant group, and the participant computing devices 50C and 50D are assigned to a second participant group.

The collaboration application running on the participant computing devices 50A, 50B, 50C and 50D presents a dialogue screen comprising a dialogue field 1004 in which text may be entered, and in which text that may have been entered on participant computing devices within the participant group is displayed. In the example shown, a user of the participant computing device 50A has entered text in the form of a first message in the dialogue field, and has sent the first message to the participant computing device 50B, via either the web service 280 or a direct wireless communication link between the participant computing devices 50A and 50B. As a result, the collaboration application running on the participant computing device 50B displays the first message in the dialogue field 1004 of the dialogue screen presented thereby. After reviewing the first message, a user of the participant computing device 50B may edit the displayed first message, if desired, and may send the first message to the collaboration server 76 as participant contribution. Similarly, in the example shown, a user of the participant computing device 50C has entered text in the form of a second message in the dialogue field 1004, and has sent the second message to the participant computing device 50D. The collaboration application running on the participant computing device 50D displays the received second message in the dialogue field 1004 of the dialogue screen presented thereby. After reviewing the second message, the user of the participant computing device 50D may edit the displayed second message, if desired, and may send the second message to the collaboration server 76 as participant contribution.

As participant contributions are received, the collaboration server 76 communicates the messages to the general purpose computing device 28 for display on the interactive surface 24 of the interactive whiteboard 22, as text. As will be understood, in this manner, text displayed on the interactive surface 24 results from collaboration between users of participant computing devices assigned to the participant groups defined within the collaboration session.

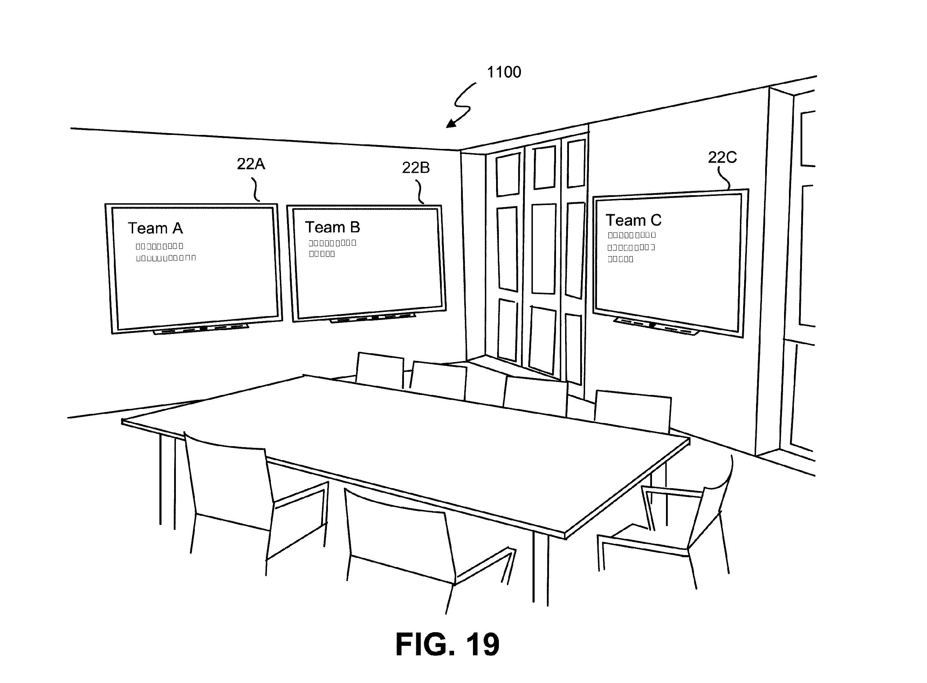

Although in embodiments described above, the collaboration system comprises one interactive whiteboard 22 installed at the event site, in other embodiments, there may be more than one interactive whiteboard installed at the event site. For example, Figure 19 shows a portion of another embodiment of a collaboration system, and which is generally indicated by reference numeral 1100. Collaboration system 1100 is generally similar to collaboration system 20 described above, but comprises three (3) interactive whiteboards 22A, 22B and 22C installed at an event site. Each of the interactive whiteboards 22A, 22B and 22C is in communication with the general purpose computing device 28 and with the collaboration server 76. In this embodiment, participant computing devices 50 are assigned to participant groups that are defined within the collaboration session, such as for example by the facilitator. Additionally, in this embodiment, each interactive whiteboard 22A, 22B and 22C is assigned to one of the participant groups within the collaboration session as defined by, for example, the facilitator. In the example shown, there are three (3) participant groups defined within the collaboration session, namely "Team A", "Team B" and "Team C". The interactive whiteboard 22A has been assigned to "Team A", the interactive whiteboard 22B has been assigned to "Team B", and the interactive whiteboard 22C has been assigned to "Team C".

In this embodiment, during a collaboration session, the collaboration server 76 receives participant contributions from the participant computing devices 50, and communicates the participant contributions to the general purpose computing device 28 for display on the interactive surface of the interactive whiteboard assigned to the participant group associated with the sending participant computing device. Thus, upon receiving a participant contribution from a participant computing device 50 assigned to "Team A", the collaboration server 76 communicates the participant contribution to the general purpose computing device 28 for display on the interactive surface of the interactive whiteboard 22A. Similarly, the collaboration server 76 communicates participant contributions received from participant computing devices 50 assigned to "Team B" and "Team C" to the general purpose computing device 28 for display on the interactive surfaces of the interactive whiteboards 22B and 22C, respectively.

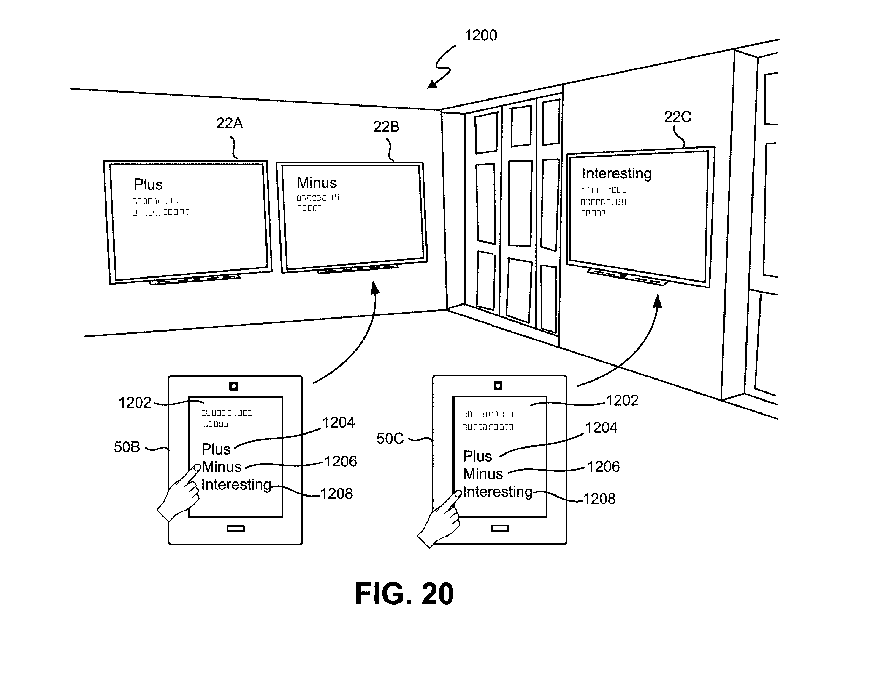

Other configurations are possible. For example, Figure 20 shows a portion of another embodiment of a collaboration system, and which is generally indicated by reference numeral 1200. Collaboration system 1200 is generally similar to collaboration system 20 described above, but comprises three (3) interactive whiteboards 22A, 22B and 22C installed at an event site. Each of the interactive whiteboards 22A, 22B and 22C is in communication with the general purpose computing device 28 and with the collaboration server 76. In this embodiment, the collaboration server 76 is configured to categorize participant contributions according to categories defined within the collaboration session. In this embodiment, each interactive whiteboard 22A, 22B and 22C is assigned to one of the categories defined within the collaboration session. In the example shown, the categories are "plus", "minus" and "interesting". The interactive whiteboard 22A has been assigned to the category "plus", the interactive whiteboard 22B has been assigned to the category "minus", and the interactive whiteboard 22C has been assigned to the category "interesting"

The collaboration system 1200 further comprises a plurality of participant computing devices 50B and 50C in communication with the collaboration server, and each of the participant computing devices is configured to run a collaboration application. During a collaboration session, the collaboration application running on each of the participant computing devices presents a dialogue screen 1202. The dialogue screen 1202 comprises a text field in which text may be entered by the user. The dialogue screen 1202 also comprises a button 1204, a button 1206 and a button 1208. Each button 1204, 1206 and 1208 is associated with a respective one of the categories defined within the collaboration session. In the example shown, the button 1204, button 1206 and button 1208 are each associated with the category "plus", "minus" and "interesting", respectively. Each of the buttons 1204, 1206 and 1208 may be selected to send a participant contribution to the collaboration session, whereby the participant contribution comprises the text entered in the text field and a selected category.

As each participant contribution is received, the collaboration server 76 communicates the entered text to the general purpose computing device 28 for display on the interactive surface 24 of the interactive whiteboard assigned to the selected category. Thus, upon receiving a participant contribution having a "plus" category, the collaboration server 76 communicates the entered text to the general purpose computing device 28 for display on the interactive surface of the interactive whiteboard 22A. Similarly, the collaboration server 76 communicates participant contributions having "minus" and "interesting" categories, and communicates the entered text to the general purpose computing device 28 for display on the interactive surfaces of the interactive whiteboards 22B and 22C, respectively.

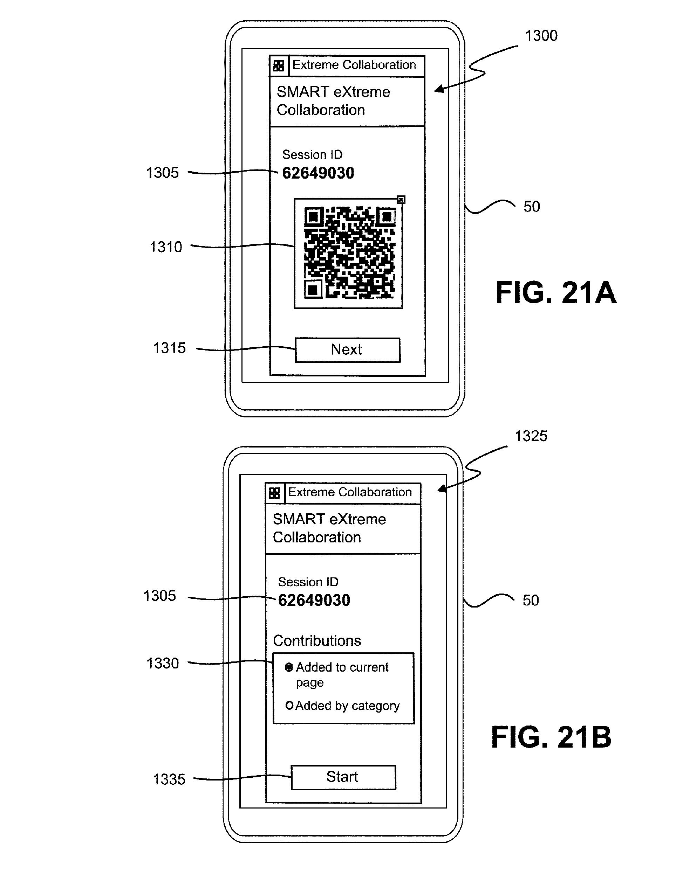

The graphical user interface presented by the collaboration application is not limited to that described above. For example, Figures 21A to 21C show graphical user interfaces presented by another embodiment of the collaboration application running on each participant computing device 50. In this embodiment, after the collaboration application has been launched, the collaboration application presents a login screen, which is shown in Figure 21A and is generally indicated by reference numeral 1300. The login screen 1300 comprises a Session ID field 1305, in which a Session ID of a collaboration session is displayed. The login screen 1300 also comprises barcode field 1310 that comprises a barcode identifying the collaboration session associated with the Session ID. The barcode within the barcode field 1310 is configured to be readable by a suitable optical scanning device. In the example shown, the barcode is in the form of a quick response (QR) code. The login screen 1300 also comprises a "Next" button 1315, which may be selected to continue with participant login.

Upon selection of the "Next" button 1315, the collaboration application presents a contribution screen, which is shown in Figure 21B and is generally indicated by reference numeral 1325. Contribution screen 1325 comprises the Session ID field 1305 in which the Session ID is displayed. Contribution screen 1325 further comprises a contributions selector 1330. Contributions selector 1330 comprises two (2) radio buttons, one of which may be selected by the user. Selection of one of the radio buttons causes participant contributions sent from the participant computing device to be displayed anywhere within a collaboration window, while selection of the other of the radio buttons causes participant contributions sent from the participant computing device to be displayed in association with a displayed category. The contribution screen 1325 further comprises a "Start" button 1335, which may be selected to connect the participant computing device 50 to the collaboration session.

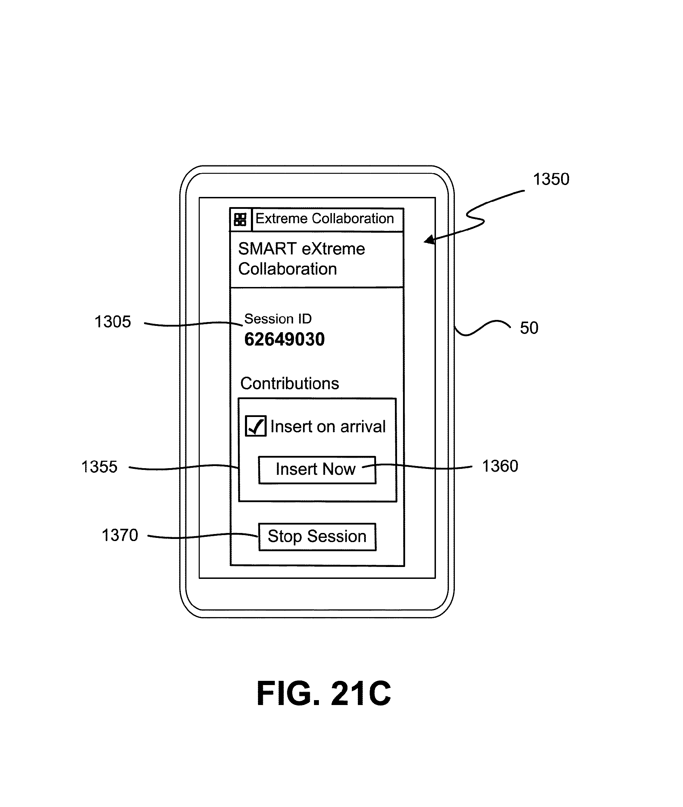

Upon connection to the collaboration session, the collaboration application presents an insertion screen, which is shown in Figure 21C and is generally indicated by reference numeral 1350. Insertion screen 1350 comprises the Session ID field 1305 in which the Session ID is displayed. Insertion screen 1350 further comprises a contributions selector 1355. The contributions selector 1355 comprises an "Insert Now" button 1360, which may be selected to display a dialogue box (not shown) in which one or more of text, an image, and an ink annotation may be entered and sent to the collaboration server as a participant contribution. The contributions selector 1355 further comprises an "Insert on arrival" box 1365, which may be selected to instruct the collaboration server communicate the participant contribution to the general purpose computing device 28 for display on the interactive whiteboard 22 as the participant contribution is received. If the "Insert on arrival" box 1365 is not selected, the collaboration server communicates all participant contributions to the general purpose computing device 28 for display on the interactive whiteboard 22 simultaneously upon receiving a display command from the facilitator. Insertion screen 1350 further comprises a "Stop Session" button 1370, which may be selected to disconnect the participant computing device 50 from the collaboration session.

The collaboration management application and the collaboration application may each comprise program modules including routines, object components, data structures, and the like, and may each be embodied as computer readable program code stored on a non-transitory computer readable medium. The computer readable medium is any data storage device that can store data. Examples of computer readable media include for example read-only memory, random-access memory, CD-ROMs, magnetic tape, USB keys, flash drives and optical data storage devices. The computer readable program code may also be distributed over a network including coupled computer systems so that the computer readable program code is stored and executed in a distributed fashion.

Although in embodiments described above, the interactive boards are described as employing machine vision to register pointer input, those skilled in the art will appreciate that other interactive boards employing other machine vision configurations, analog resistive, electromagnetic, capacitive, acoustic or other technologies to register input may be employed. Also, the interactive boards need not be mounted, supported or suspended in a generally upright orientation. The interactive boards may take other non-upright orientations.

For example, interactive boards may be employed of forms such as for example: LCD screens with camera based touch detection (for example SMART Board™ Interactive Display, model 8070i); projector based interactive whiteboards employing analog resistive detection (for example SMART Board™ interactive whiteboard Model 640); projector based interactive whiteboards employing surface acoustic wave (SAW) touch detection; projector based interactive whiteboards employing capacitive touch detection; projector based interactive whiteboards employing camera based detection (for example SMART Board™, model SBX885ix); touch tables (for example SMART Table™, such as that described in U.S. Patent Application Publication No. 2011/0069019 assigned to SMART Technologies ULC, the entire disclosure of which are incorporated herein by reference); slate computers (for example SMART Slate™ Wireless Slate Model WS200); and podium-like products (for example SMART Podium™ Interactive Pen Display) adapted to detect passive touch (for example fingers, pointer, etc, in addition to or instead of active pens).

Other types of products that utilize touch interfaces such as for example tablets, smartphones with capacitive touch surfaces, flat panels having touch screens, track pads, and the like may also be employed.

Although various embodiments of a collaboration system are shown and described, those of skill in the art will appreciate that the numbers of participant computing devices, collaboration servers and interactive boards illustrated and described is for illustrative purposes only and that those numbers of participant computing devices, collaboration servers and interactive boards can change.

Although embodiments have been described above with reference to the accompanying drawings, those of skill in the art will appreciate that variations and modifications may be made without departing from the scope thereof as defined by the appended claims.

## Claims

1. A method of conducting a collaborative event, comprising:
receiving input from at least one participant computing device joined to the collaborative event;
categorizing the input according to two or more categories defined within the collaborative event; and
displaying the input according to said two or more categories.

2. The method of claim 1, further comprising:
recognizing text input on an interactive surface; and
using the recognized text to define said two or more categories.

3. The method of claim 2, wherein said text is digital ink entered on said interactive surface and wherein said text is recognized using a hand-writing recognition application.

4. The method of any one of claims 1 to 3, wherein said displaying comprises displaying the input in an overlapping manner.

5. The method of any one of claims 1 to 3, wherein said two or more categories are cause categories of a cause and effect analysis and said displaying comprises displaying the input on one or more placeholders according to said cause categories or wherein said two or more categories identify participant groups to which participant computing devices have been assigned, and wherein said displaying comprises displaying the input on an interactive surface assigned to the participant group that generated the input..

6. The method of any one of claims 1 to 4, wherein said two or more categories are categories of a strengths, weaknesses, opportunities and threats analysis.

7. The method of any one of claims 1 to 3, wherein the collaborative event is a voting collaborative event and said two or more categories comprise two or more voting options and wherein said displaying comprises incrementing a displayed vote count.

8. The method of claim 7, further comprising displaying a number of votes available for distribution among said two or more voting options.

9. The method of claim 1, wherein said categorizing comprises searching indexed images for one or more images having an index matching said input, and wherein said displaying comprises displaying said one or more images having an index matching said input.

10. The method of claim 1, wherein the two or more categories defined within the collaborative event are two or more spatial indexes within a graphical image, and wherein said displaying comprises displaying the input on the graphical image at positions corresponding to said two or more spatial indexes.

11. The method of any one of claims 1 to 10, further comprising assigning two or more participant computing devices to a participant group, wherein said received input is collaborative input generated using said two or more participant computing devices assigned to the participant group.

12. The method of any one of claims 1 to 7, wherein said received input identifies one of the categories and comprises a message and wherein said displaying comprises displaying the message on an interactive surface under a heading corresponding to said identified category.

13. The method of claim 2 or 3 wherein said input is displayed on said interactive surface.

14. A non-transitory computer-readable medium having embodied thereon a computer program for conducting a collaborative event, said program comprising instructions which, when executed by processing structure, carry out the method according to any one of claims 1 to 13.

15. An interactive board configured to communicate with processing structure during a collaborative event, said interactive board further being configured, during said collaborative event, to perform the method of any one of claims 1 to 13.

16. A method of configuring a collaborative event comprising:
recognizing text within at least a first portion of digital ink entered on an interactive surface; and
using recognized text to define two or more categories of said collaborative event.

17. The method of claim 16, further comprising:
recognizing text within a second portion of the digital ink; and
using text recognized within the second portion to define a question of said collaborative event.

18. The method of claim 17, further comprising:
designating said first portion of the digital ink and said second portion of the digital ink via input on the interactive surface.

19. A non-transitory computer-readable medium having embodied thereon a computer program for configuring a collaborative event, said program comprising instructions which, when executed by processing structure, carry out the method of any one of claims 16 to 18.

20. An interactive board comprising an interactive surface, the interactive board being configured to communicate with processing structure conducting a collaborative event, the interactive board further being configured, during said collaborative event, to perform the method of claims 16 to 18.
